# FASCICULE DE BREVET EUROPEEN

(11) **EP 2 724 842 B1**
(45) Date de publication et mention de la délivrance du brevet: **06.04.2016**
(21) Numéro de dépôt: 13188068.4
(22) Date de dépôt: 10.10.2013
(51) Int. Cl.: B29C 65/08, F16L 37/092, F16L 37/098, F16L 47/02

(54) **Raccord modulaire**
Modulanschluss
Modular connector

(30) Priorité: 26.10.2012 FR 1260224
(43) Date de publication de la demande: 30.04.2014
(73) Titulaire: COMAP, 69008 Lyon (FR)
(72) Inventeur: Le Clinche, Pascal, 45000 Orleans (FR)
(74) Mandataire: Verriest, Philippe

(56) Documents cités:
- EP-A1- 0 132 319
- EP-A1- 0 333 948
- EP-A1- 2 503 207
- EP-A1- 2 508 784
- DE-A1-102011 103 385
- DE-U1-202005 000 752
- GB-A- 2 211 506
- US-A- 3 944 261

## Description

La présente invention concerne un raccord instantané modulaire et un procédé de fabrication du raccord.

Les raccords instantanés sont des organes de liaison de conduites fluidiques. Un tel raccord modulaire est connu du document US 3 944 261 A.

Les conduites peuvent se présenter sous forme de tubes, de raccords enfichables ou de moyens de liaison tubulaires à un appareil comme par exemple un distributeur, un compteur de chaudière, un ballon d'eau chaude, un purgeur ou un régulateur.

Un corps tubulaire constitue la partie centrale du raccord et peut avoir une multitude de formes selon l'utilisation du raccord. Le raccord peut être droit : dans ce cas le corps tubulaire est un manchon. Le corps tubulaire peut être un coude. Le raccord peut également se présenter sous la forme d'un té si trois conduites doivent être raccordées ensembles.

Le raccord comprend un dispositif de raccordement à chaque extrémité à raccorder à une conduite. Le dispositif peut présenter plusieurs géométries correspondant aux standards de connexion communément utilisés.

Etant donné le nombre important de variantes de corps tubulaires et de dispositifs de raccordement, la constitution d'une gamme de raccords comprenant toutes les combinaisons possibles de corps tubulaires et de dispositifs de raccordement peut s'avérer difficile à mettre en oeuvre.

En effet si le raccord est réalisé par moulage en matière thermoplastique, le nombre de moules doit correspondre aux nombre de variantes.

La fabrication peut également se révéler contraignante : un nombre d'exemplaires réduit de certaines variantes peu courantes oblige à réaliser des petites séries de fabrication.

Ainsi, le coût de production de raccords peu utilisés est susceptible d'être élevé.

La présente invention vise à résoudre tout ou partie des inconvénients mentionnés ci-dessus.

A cet effet, la présente invention concerne un raccord modulaire selon la revendication 1.

Selon un aspect de l'invention, la surface de révolution tubulaire de liaison du dispositif est une surface extérieure.

Selon un aspect de l'invention, la surface de révolution tubulaire de liaison du dispositif est une surface cylindrique.

Les organes de liaison des dispositifs de la gamme présentent des dimensions identiques.

Les premières extrémités des dispositifs de raccordement présentent une pluralité de formes, la pluralité de formes comprenant une emboiture crénelée, une queue enfichable ou une queue encliquetable.

La première extrémité peut varier d'un dispositif de raccordement à un autre tandis que la seconde extrémité présente toujours la même géométrie. Tous les dispositifs de raccordement de la gamme sont adaptables à un même type d'emboiture de corps tubulaire. L'emboiture peut ainsi être standardisée.

Un corps tubulaire de raccord en matière thermoplastique comprend une âme centrale pourvue d'au moins une emboiture destinée à être raccordée à un organe de liaison d'un dispositif de raccordement, l'emboiture comprenant une collerette. La collerette présente une surface de révolution tubulaire de liaison.

Selon un aspect de l'invention, la surface de révolution tubulaire de liaison du corps tubulaire est une surface intérieure.

Selon un aspect de l'invention, la surface de révolution tubulaire de liaison du corps tubulaire est une surface cylindrique.

Selon un aspect de l'invention, le corps tubulaire présente au moins une extrémité destinée à être raccordée à une conduite pour permettre le passage d'un fluide entre le corps tubulaire et la conduite.

La gamme de corps tubulaires, comporte une pluralité de corps tubulaires, dans laquelle l'âme centrale est une portion tubulaire rectiligne, une portion tubulaire coudée ou dans laquelle l'âme centrale comprend plusieurs portions tubulaires organisées autour d'un point central et raccordées de manière à permettre le passage d'un fluide d'une portion à l'autre.

L'extrémité des corps tubulaires présente une pluralité de formes, la pluralité de formes comprenant une emboiture crénelée, une queue enfichable ou une queue encliquetable.

Une première partie des corps tubulaires de la gamme présente au moins une emboiture pourvue d'une collerette mais aucune extrémité destinée à être raccordée à une conduite.

Ces variantes sont susceptibles d'être raccordées à des dispositifs présentant des formes de premières extrémités diverses. Ainsi le nombre de combinaisons de corps tubulaires et de dispositifs est beaucoup plus important que le nombre de variantes de la gamme de dispositifs et de la gamme de corps tubulaires réunies.

Une seconde partie des corps tubulaires de la gamme présente à la fois au moins une emboiture pourvue d'une collerette et au moins une extrémité destinée à être raccordée à une conduite.

Un corps comprenant une extrémité destinée à être raccordée à une conduite est l'équivalent fonctionnel du raccordement d'un dispositif à une emboiture du corps. Ainsi une extrémité destinée à être reliée directement à une conduite nécessite un raccordement de moins pour assurer la même fonction.

Cette disposition peut s'avérer intéressante pour les associations courantes de corps tubulaires et de types d'extrémités à raccorder à une conduite, le nombre de pièces utilisées pour une association de corps modulaires et de dispositifs de raccordement étant réduit.

La surface de révolution du dispositif de raccordement et la surface de révolution du corps tubulaire présentent une complémentarité de forme.

Selon un aspect de l'invention, les surfaces de révolution sont solidarisées par une soudure annulaire par ultrasons. La soudure étanchéifie le raccord modulaire par rapport au milieu extérieur.

Selon un aspect de l'invention, la surface de révolution du corps tubulaire est intérieure et la surface de révolution du dispositif est extérieure.

Selon un aspect de l'invention, le raccord modulaire comprend une embase orientable radialement agencée pour être solidarisée à la première extrémité du dispositif de raccordement.

Selon un aspect de l'invention, le dispositif de raccordement présente un repère visuel attestant du bon positionnement de la conduite sur la première extrémité.

Selon un aspect de l'invention, l'embase orientable est destinée à solidariser la conduite au dispositif de raccordement.

Selon un aspect de l'invention, une gamme de raccords modulaires comprenant une pluralité de raccords modulaire.

La gamme de raccords est beaucoup plus étendue que les gammes de dispositifs et de corps tubulaires car elle résulte de l'association de plusieurs éléments de ces gammes.

L'évolution de la gamme de raccords est également facilitée du fait de la modularité du raccord. Par exemple, l'ajout d'un nouveau type de dispositif de raccordement conduit à l'élaboration d'une multitude de nouveaux raccords comprenant ce dispositif.

La présente invention concerne également un procédé de fabrication d'un raccord modulaire à partir d'au moins un corps tubulaire issu de la gamme de corps tubulaires et d'un dispositif de raccordement issu de la gamme de dispositifs de raccordement, le procédé comprenant les étapes consistant à :
(a) Choisir le corps tubulaire dans la gamme de corps tubulaires et le ou les dispositifs de raccordement dans la gamme de dispositifs de raccordement,
(b) Positionner le dispositif de raccordement et le corps tubulaire de telle sorte à faire coïncider la surface tubulaire de liaison de l'organe de liaison et la surface tubulaire de liaison de la collerette,
(c) Effectuer une soudure annulaire par ultrasons du dispositif de raccordement sur le corps tubulaire.

L'aspect modulaire du raccord joue également un rôle dans le procédé de fabrication. Les corps tubulaires et les dispositifs de raccordement sont en matière thermoplastique et réalisés par moulage.

La quantité de moules utilisée pour la réalisation des dispositifs et des corps correspond au nombre de variantes de dispositifs et de corps tubulaires, c'est-à-dire un nombre bien inférieur au nombre de variantes de raccords modulaires.

Par rapport à une gamme de raccords monoblocs, dans laquelle le nombre de moules correspond au nombre de variantes, la gamme de raccords modulaires représente une économie non négligeable du nombre de moules.

Selon un autre aspect de l'invention, le raccord modulaire comprend en outre un élément de fixation agencé pour être disposé à un emplacement dédié du raccord modulaire et étant apte à réaliser le raccordement de la conduite à la première extrémité en se déformant de manière irréversible.

Selon un aspect de l'invention, l'élément de fixation comprend une douille sensiblement cylindrique entourant la première extrémité, un espace séparant la douille et la première extrémité étant destiné à recevoir une extrémité de la conduite.

La douille vient comprimer la conduite sur la première extrémité : après la déformation irréversible, la conduite est raccordée à la première extrémité.

Selon un aspect de l'invention, une portion de visualisation de l'extrémité de la conduite dans l'espace destiné à la recevoir est ménagée dans la douille.

Cette disposition permet à un utilisateur de constater que l'extrémité de la conduite est bien positionnée dans l'espace entre la douille et la première extrémité. Ainsi l'utilisateur peut procéder à la déformation irréversible de l'élément de fixation pour le raccordement de la conduite à la première extrémité.

De préférence, la portion de visualisation de la douille est une ouverture ou une encoche ménagée dans la paroi de ladite douille.

Selon un aspect de l'invention, l'élément de fixation comprend en outre une bague destinée au positionnement d'un outil apte à réaliser la déformation irréversible l'élément de fixation. De préférence, la douille est métallique. En particulier, l'outil est une pince à sertir. Selon un autre aspect de l'invention, la bague comprend un témoin visuel attestant de la déformation irréversible de l'élément de fixation.

Selon un aspect de l'invention, le raccord modulaire comprend en outre un organe de maintien de la conduite en une position raccordée à la première extrémité, l'organe de maintien comprenant une portion élastique agencée pour autoriser le rapprochement ou l'insertion de la conduite pour atteindre la position raccordée et agencée pour empêcher par contact l'éloignement de la conduite de la première extrémité.

Selon un aspect de l'invention, le raccord modulaire comprend en outre un élément de neutralisation de l'organe de maintien de la conduite, l'élément de neutralisation étant apte à déplacer la portion élastique en une position de retrait dans laquelle la conduite et la première extrémité sont aptes à être éloignées.

Selon un aspect de l'invention, l'organe de maintien est circulaire et est agencé pour entourer la conduire lorsque cette dernière est en position raccordée. De préférence, la portion élastique comprend une pluralité de franges réparties circulairement En particulier, les franges sont disposées transversalement à la direction de rapprochement ou d'insertion de la conduite vers la position raccordée.

Selon un aspect de l'invention, l'âme centrale du corps tubulaire est pourvue d'une emboiture d'un second type apte à être raccordée par complémentarité de forme à l'emboiture d'un autre corps tubulaire, l'emboiture de l'autre corps tubulaire comprenant une collerette présentant une surface de révolution de forme complémentaire à une surface de révolution de l'emboiture du second type.

Cette disposition permet de raccorder fluidiquement au moins deux corps tubulaires, par exemple pour constituer une rampe.

De toute façon l'invention sera bien comprise à l'aide de la description qui suit en référence aux dessins schématiques annexés représentant, à titre d'exemple non limitatif, une forme d'exécution de ce raccord modulaire.
Figure 1 est une coupe d'un corps tubulaire selon un premier mode de réalisation.
Figures 2, 4 et 6 sont des vues en perspective de trois variantes de corps tubulaires selon le premier mode de réalisation.
Figures 3 et 5 sont des vues en coupe de deux variantes de corps tubulaires selon le premier mode de réalisation.
Figures 7, 9 et 11 sont des vues en coupe longitudinales de trois variantes du dispositif de raccordement.
Figures 8, 10, 12 sont des vues en perspective de trois variantes du dispositif de raccordement.
Figure 13 est une vue en coupe longitudinale d'un raccord modulaire selon le premier mode de réalisation.
Figures 14, 15 et 16 sont des vues en perspective d'un raccord modulaire selon le premier mode de réalisation.
Figure 17 est une vue en coupe longitudinale d'un corps tubulaire selon un deuxième mode de réalisation.
Figure 18 est une vue en coupe longitudinale d'un raccord modulaire comprenant un corps tubulaire selon le deuxième mode de réalisation.
Figure 19 est une vue en perspective d'un raccord modulaire comprenant un corps tubulaire selon le deuxième mode de réalisation.
Figure 20 est une vue de face d'un raccord modulaire selon le deuxième mode de réalisation et comprenant une embase filetée et une coiffe.
Figure 21 est une vue en coupe longitudinale d'un raccord modulaire selon le deuxième mode de réalisation et comprenant une embase filetée et une coiffe.
Figure 22 est une vue de face d'un raccord modulaire selon le premier mode de réalisation comprenant un organe de maintien en une position raccordée.
Figure 23 est une coupe longitudinale du raccord modulaire selon le premier mode de réalisation comprenant un organe de maintien en une position raccordée.
Figure 24 est une coupe longitudinale d'un corps tubulaire et de deux dispositifs de raccordement compris dans le raccord modulaire des figures 22 et 23.
Figure 25 est une vue en perspective du corps tubulaire et de deux dispositifs de raccordement compris dans le raccord modulaire des figures 22 et 23.
Figures 26 et 27 sont des vues en perspectives de raccord modulaires selon le premier mode de réalisation comprenant un élément de fixation d'une conduite.
Figure 28 est un corps tubulaire pourvu d'une emboiture d'un second type selon un troisième mode de réalisation.
Figure 29 est un raccord modulaire selon le troisième mode de réalisation comprenant plusieurs corps tubulaires pourvus d'emboitures de second type.

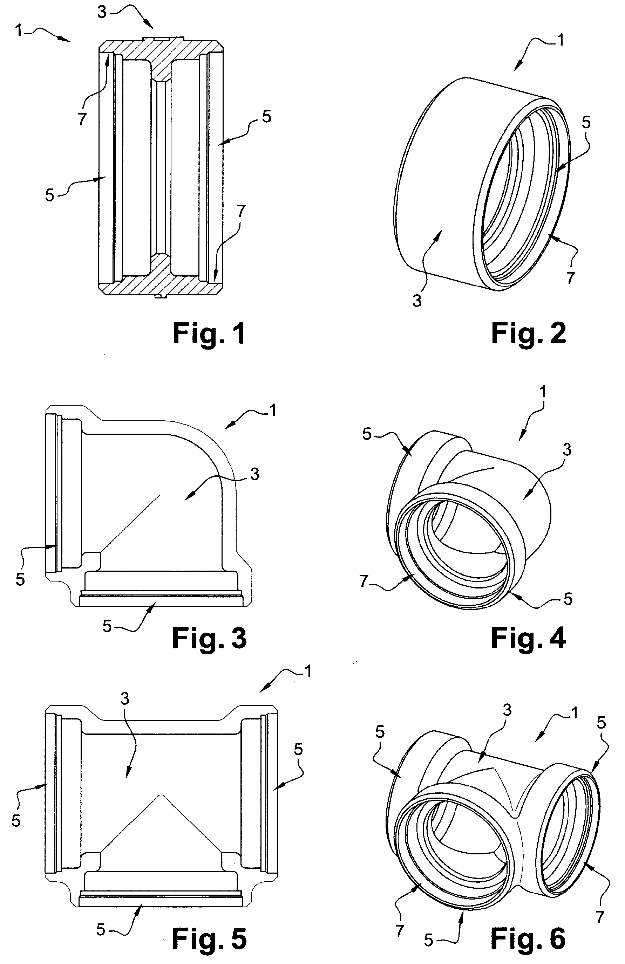

Comme illustré aux figures 1 et 2, un corps tubulaire 1 comprend une âme centrale 3 tubulaire en matière thermoplastique. L'âme centrale 3 peut se décliner sous forme de manchon, comme illustré figures 1 et 2, sous forme de coude, comme illustré figures 3 et 4, ou sous forme de té, comme illustré figures 5 et 6.

Selon un premier mode de réalisation, l'âme centrale 3 est pourvue d'une collerette 5 à chacune de ses emboitures. Lesdites emboitures sont également appelées emboitures du premier type dans le présent texte. Chaque collerette 5 présente une surface de révolution tubulaire de liaison 7 intérieure.

L'ensemble des variantes des corps tubulaires 1 constitue une gamme de corps tubulaires 1.

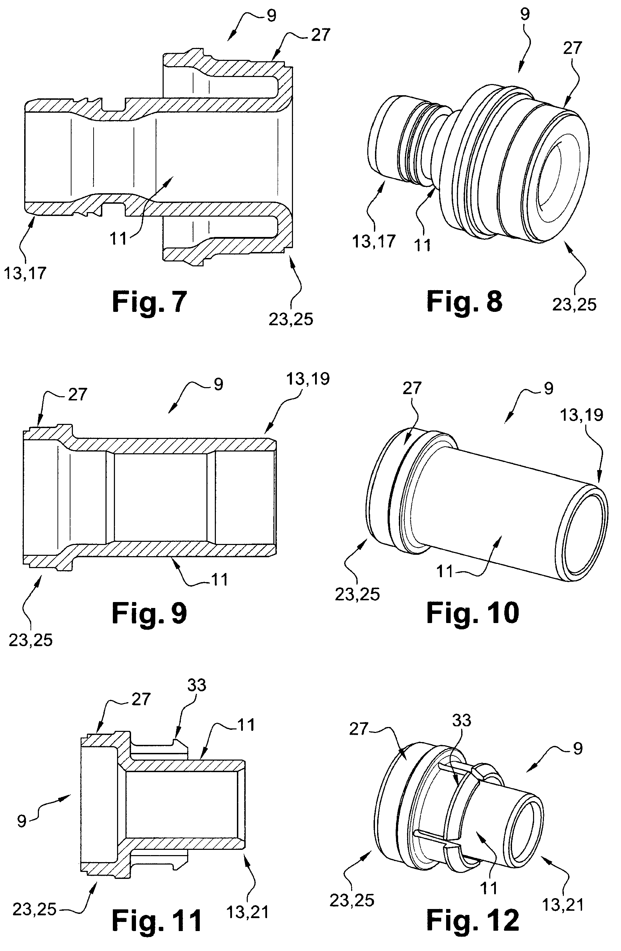

Comme illustré aux figures 7 à 12, un dispositif 9 de raccordement comprend une portion tubulaire 11 en matière thermoplastique.

La portion tubulaire 11 présente une première extrémité 13 destinée à être raccordée à une conduite 14.

Une conduite 14 peut se présenter sous forme de tube 15, de raccord enfichable ou de moyens de liaison tubulaires à un appareil.

Une première variante de la première extrémité 13, présentée figures 7 et 8, est une emboiture crénelée 17. Une seconde variante, présentée figures 9 et 10, est une queue enfichable 19. La troisième variante, présentée figures 11 et 12 est une queue encliquetable 21.

La portion tubulaire 11 présente une seconde extrémité 23 comprenant un organe de liaison 25. L'organe de liaison 25 présente une surface de révolution tubulaire de liaison 27 extérieure.

L'ensemble des variantes des dispositifs 9 de raccordement constitue une gamme de dispositifs 9 de raccordement.

La forme de la surface de révolution 27 extérieure de l'organe de liaison 25 est complémentaire à la forme de la surface de révolution 7 intérieure de la collerette 5. Ainsi l'organe de liaison 25 peut être inséré dans la collerette 5 du corps tubulaire 1.

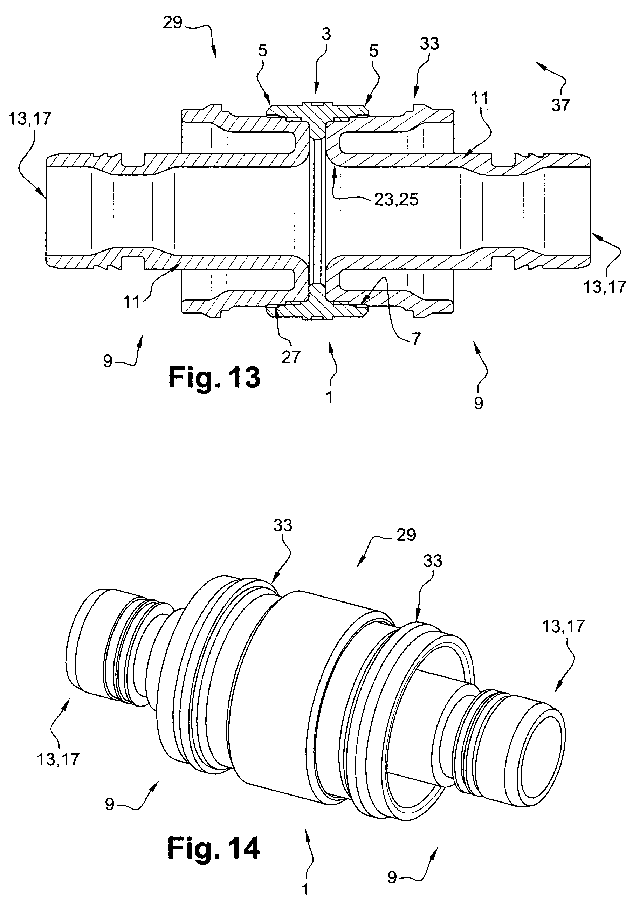

Comme illustré aux figures 13 à 16 et 18 à 21, un raccord modulaire 29 est un assemblage d'un corps tubulaire 1 et d'au moins un dispositif 9 de raccordement.

Lorsque l'organe de liaison 25 est inséré dans la collerette 5, la surface extérieure 27 est en regard de la surface intérieure 7. Cette disposition permet une solidarisation du dispositif 9 de raccordement au corps tubulaire 1 par une soudure joignant la surface intérieure 7 à la surface extérieure 27.

Selon un mode de mise en oeuvre du procédé de fabrication, la soudure est annulaire et réalisée par ultrasons.

Comme illustré aux figures 13 et 14, le raccord modulaire 29 peut être un manchon, pourvu de deux emboitures crénelées 17, destiné à relier deux tubes 15 flexibles.

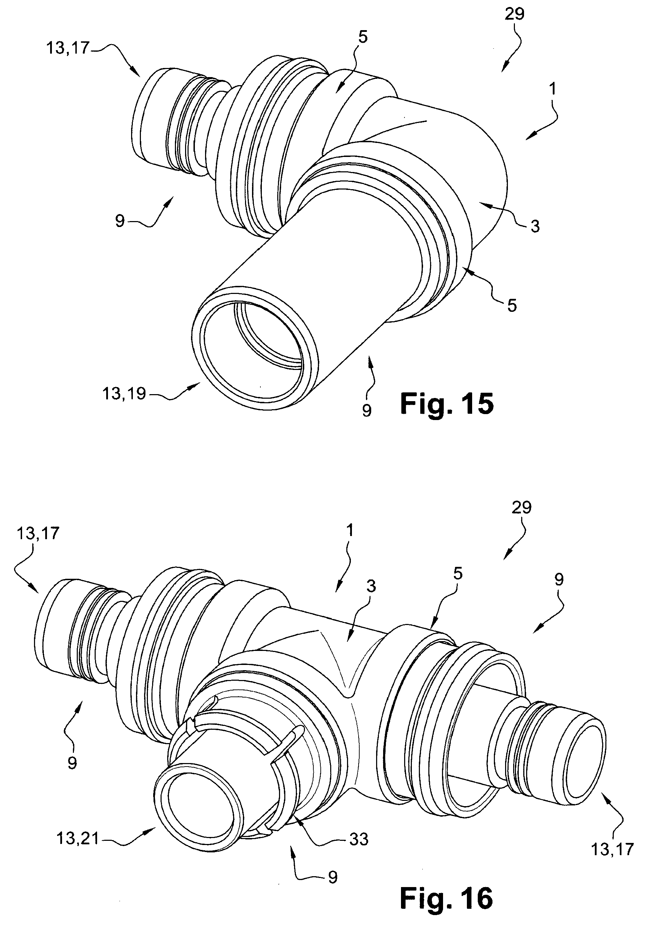

La figure 15 présente un raccord modulaire 29 coudé pourvu de deux types de dispositifs 9 de raccordement : une emboiture crénelée 17 et une queue enfichable 19.

De même, la figure 16 présente un raccord modulaire 29 sous forme de té pourvu de dispositifs 9 de raccordement de différents types: deux emboitures crénelées 17 et une queue encliquetable 21.

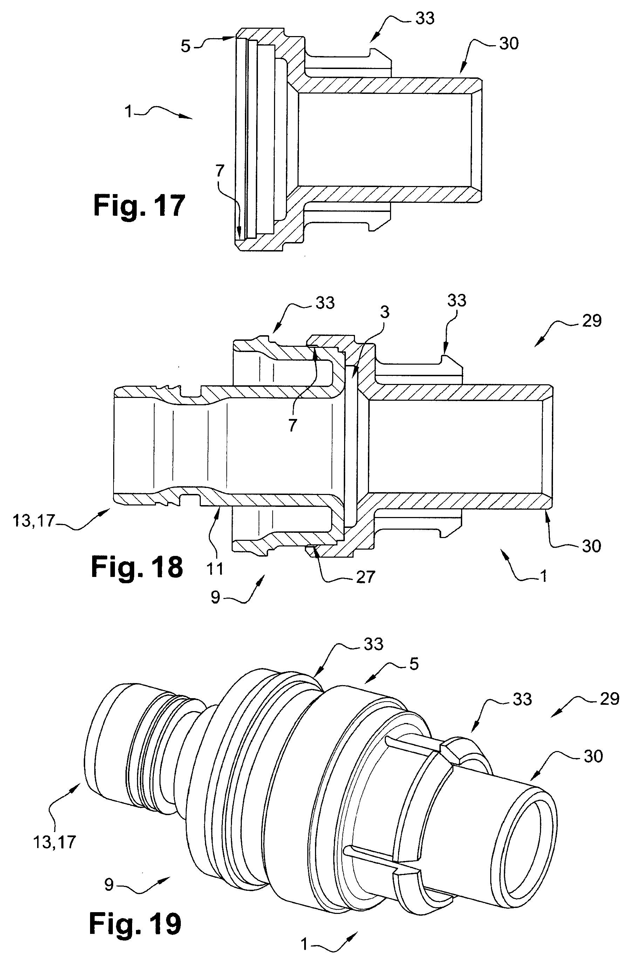

Selon un deuxième mode de réalisation, illustré figures 17 à 19, l'âme centrale 3 du corps tubulaire 1 est pourvue à au moins une extrémité d'une collerette 5 et comprend également une extrémité 30 destinée à être raccordée à une conduite 14.

L'extrémité 30 destinée à être raccordée à une conduite 14, est similaire à la première extrémité 13 du dispositif 9 de raccordement et se décline de la même manière selon plusieurs variantes comme une emboiture crénelée, une queue enfichable ou une queue encliquetable.

Les figures 17 à 19 illustrent une variante du raccord 29 dans laquelle l'extrémité 30 est une queue encliquetable destinée à être raccordée à une embase 31 filetée ou taraudée.

L'embase 31 peut quant à elle être vissée sur divers appareils par l'intermédiaire d'un collecteur ou d'une vanne. L'embase 31 peut également être vissée à une applique, un radiateur ou une pompe présentant des moyens de liaison tubulaires adaptés.

Par rapport à un raccord 29 similaire obtenu selon le premier mode de réalisation comprenant un corps tubulaire 1 et deux dispositifs 9 de raccordement, le raccord selon le deuxième mode de fabrication comprend seulement un dispositif 9 de raccordement et un corps tubulaire 1.

Le raccord modulaire 29, selon le premier ou le deuxième mode de réalisation, comprenant un corps tubulaire 1 et au moins un dispositif 9 de raccordement est destiné à raccorder deux conduites 14. Le raccordement autorise la circulation d'un fluide entre les conduites 14 et prévient toute fuite de fluide vers l'extérieur au niveau du raccord et des liaisons entre le raccord et les conduites 14.

Selon le premier et le deuxième mode de réalisation, une coiffe 31' peut être utilisée pour maintenir le tube 15 en position sur le dispositif 9 de raccordement du raccord.

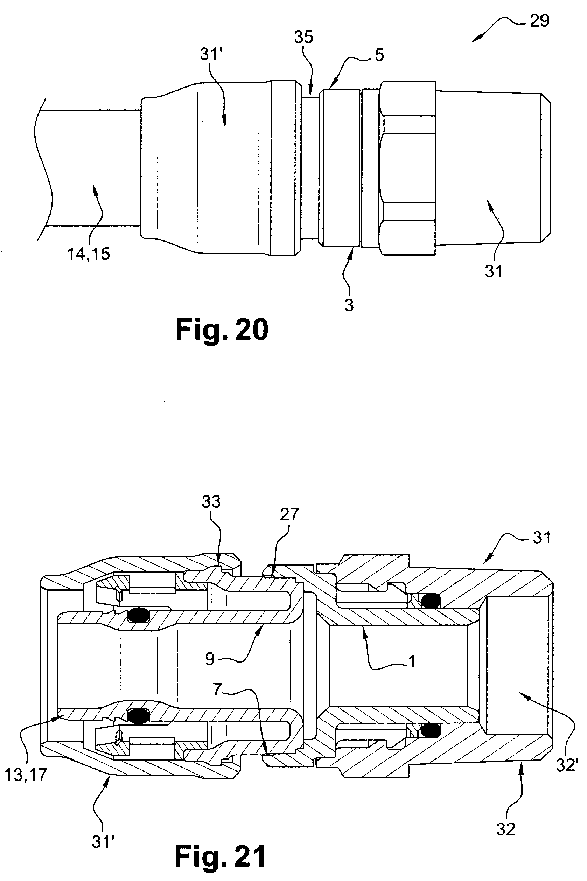

La coiffe 31' présente une forme complémentaire au dispositif 9 de raccordement comme illustré figures 20 et 21. La coiffe 31' comprend un système d'accrochage assurant la fixation du tube 15 sur le dispositif 9 de raccordement de manière étanche, en utilisant une bague d'accrochage coopérant avec la coiffe 31 pour empêcher le retrait du tube 15. La bague d'accrochage comporte des dents destinées à s'accrocher sur la paroi extérieure du tube 15.

La coiffe 31' maintient un tube 15 flexible entre la coiffe 31' et l'emboiture crénelée 17. L'étanchéité est réalisée par un joint d'étanchéité entre le tube 15 et l'emboiture crénelée 17.

L'embase 31 est utilisée avec une queue encliquetable 21. Selon cette variante l'embase 31 comprend un filetage 32 permettant le raccord de la conduite 14 par vissage sur le filetage 32. L'intérieur de l'embase 31 présente un alésage 32' en regard du filetage 32.

Un ergot 33 du dispositif 9 de raccordement permet l'encliquetage de l'embase 31 sur le dispositif 9 de raccordement.

Un repère visuel 35 laissant entrevoir la conduite 14 à travers le dispositif 9, permet de s'assurer du bon positionnement de la conduite 14 sur la première extrémité 13, comme illustré figures 20 et 21.

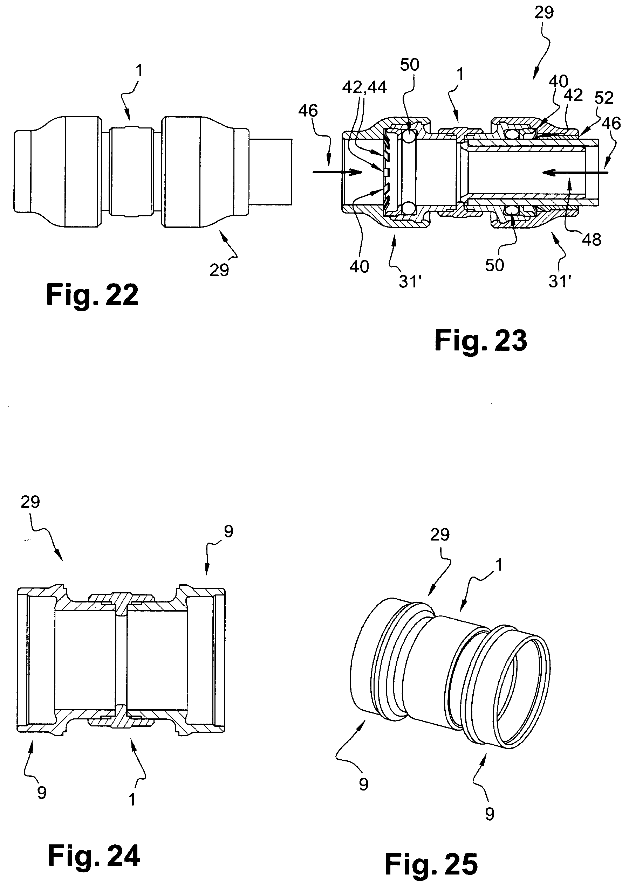

Comme illustré aux figures 22 à 25 et selon une variante du premier mode de réalisation, le raccord modulaire 29 comprend un organe de maintien 40 de la conduite 14 en une position raccordée.

L'organe de maintien 40 comprend une portion élastique 42 agencée pour autoriser le rapprochement ou l'insertion de la conduite 14 pour atteindre la position raccordée. La portion élastique 42 est également agencée pour empêcher le retrait de la conduite 14 une fois que celle-ci est en position raccordée.

Pour ce faire la portion élastique 42 est constituée de franges 44 réparties circulairement autour de la première extrémité 13. Les franges 44 sont réparties transversalement à la direction d'insertion ou de rapprochement 46 de la conduite 14 et de la première extrémité 13.

Comme illustré plus particulièrement à la figure 23, l'insertion de la conduite 14 dans l'organe de maintien 40 provoque la déformation élastique des franges 44. Ainsi la conduite 14 peut être approchée de la position raccordée.

Une fois que l'extrémité de la conduite 14 est insérée dans l'organe de maintien 40, les franges 44 empêchent le retrait ou l'éloignement de la conduite 14 de la première extrémité 13. Cette disposition permet d'assurer le raccordement de la conduite 14 à la première extrémité 13.

Si la conduite 14 est flexible, le raccord modulaire peut comprendre un cylindre 48 destiné à servir d'appui à l'extrémité de la conduite pour éviter la déformation de sa paroi interne. En outre le raccord modulaire comprend un joint d'étanchéité circulaire 50.

Le raccord modulaire 29 peut comprendre un élément de neutralisation 52 de l'organe de maintien 40. Le rôle de cet élément de neutralisation 52 est de déverrouiller l'organe de maintien 40 pour permettre de retirer la conduite 14 du raccord modulaire 29.

Comme illustré à la figure 23, l'élément de neutralisation 52 est une douille mobile axialement agencée pour déplacer les franges 44 par contact de manière suffisante pour que celles-ci ne contraignent plus la conduite 14 à rester en position raccordée. L'élément de neutralisation 52 est alors dans une position dite position de retrait.

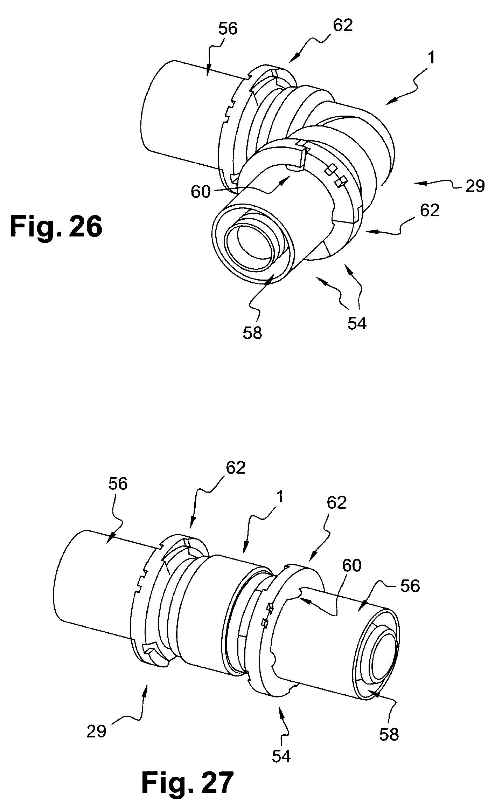

Comme illustré aux figures 26 et 27 et selon une autre variante du second mode de réalisation, le raccordement de la conduite 14 à la première extrémité 13 peut être sécurisé par un élément de fixation 54. L'élément de fixation 54 est disposé à un emplacement dédié du raccord modulaire 29, le positionnement étant réalisé par complémentarité de forme.

L'élément de fixation 54 comprend une douille 56 sensiblement cylindrique entourant la première extrémité 13. Un espace 58 sépare la douille 56 et la première extrémité 13 et est destiné à recevoir l'extrémité de la conduite 14 à raccorder.

Une portion de visualisation 60 de l'extrémité de la conduite 14 dans l'espace 58 est ménagée dans la douille 56. Ainsi il est possible pour un utilisateur de constater visuellement que l'extrémité de la conduite 14 est bien en position raccordée. La portion de visualisation 60 de la douille 56 est une encoche ménagée dans la paroi de ladite douille 56.

L'élément de fixation 54 comprend en outre une bague 62 destinée au positionnement d'un outil de sertissage ou pince à sertir. Le sertissage a pour effet de déformer de manière irréversible l'élément de fixation 54. Une fois déformée, la douille 56 vient comprimer la conduite 14 sur la première extrémité 13 et empêche ainsi la séparation de conduite 14 et de la première extrémité 13.

La bague 62 comprend un témoin visuel attestant de la déformation irréversible de l'élément de fixation. Dans le mode réalisation présenté, le sertissage de l'élément de fixation provoque la déformation de la géométrie externe de la bague 62. Cette déformation constitue le témoin visuel.

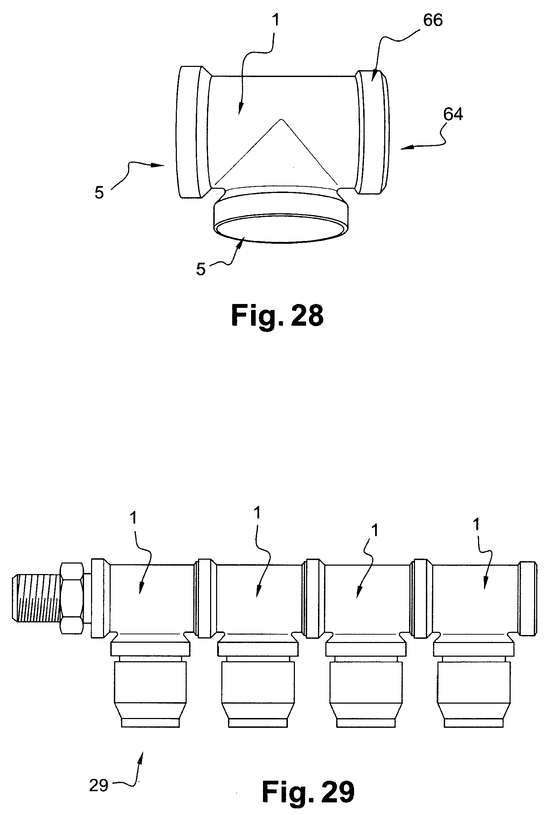

Comme illustré aux figures 28 et 29 selon un troisième mode de réalisation, le corps tubulaire 1 comprend une emboiture du type précité ou emboiture du premier type et en outre une emboiture d'un deuxième type 64.

L'emboiture du deuxième type 64 présente une surface de révolution 66 de géométrie identique à celle d'un dispositif 9 de raccordement. Cette disposition permet de raccorder plusieurs corps tubulaires 1, les emboitures du premier type coopérant avec les emboitures du second type 64.

Comme illustré à la figure 29 et selon le troisième mode de réalisation il est ainsi possible de raccorder plusieurs raccords modulaires 29 pour constituer une rampe. Cet assemblage peut également être considéré comme un raccord modulaire 29 comprenant plusieurs corps tubulaires 1.

Nous avons ci-dessus décrit trois modes de réalisation du raccord modulaires. Ces modes de réalisation présentent des similitudes définissant les caractéristiques communes de tous les raccords modulaires : la présence d'au moins un corps tubulaire 1 et d'au moins un dispositif 9 de raccordement. Cette disposition permet à un utilisateur de combiner corps tubulaires 1 et dispositifs 9 de raccordement selon le raccord qu'il souhaite mettre au point.

Les trois modes de réalisation se différencient selon les caractéristiques suivantes. Selon le premier mode de réalisation un corps tubulaire 1 est raccordé à un ou plusieurs dispositifs 9 de raccordement comprenant des emboitures d'un premier type destinées à être raccordées à des conduites 14.

Selon le deuxième mode de réalisation, le corps tubulaire 1 comprend en outre une extrémité 30 destinée à être raccordée à une conduite 14.

Enfin, selon le troisième mode de réalisation, le corps tubulaire 1 comprend également une emboiture d'un deuxième type 64 permettant de se raccorder à une emboiture du premier type d'un autre corps tubulaire 1. Il est ainsi possible de constituer des raccords modulaires comprenant plusieurs corps tubulaires.

## Revendications

1. Raccord modulaire (29) comprenant un dispositif (9) de raccordement en matière thermoplastique comportant une portion tubulaire (11) pourvue :
- d'une première extrémité (13) destinée à être raccordée à une conduite (14) pour permettre le passage d'un fluide entre la conduite (14) et la portion tubulaire (11),
- d'une seconde extrémité (23) comportant un organe de liaison (25) destiné à être raccordé à une emboiture d'un corps tubulaire (1) de raccord, la seconde extrémité (23) étant agencée pour permettre le passage d'un fluide entre la portion tubulaire (11) et le corps tubulaire (1) de raccord, l'organe de liaison (25) présentant une surface de révolution (27) tubulaire de liaison,
le dispositif (9) de raccordement est compris dans une gamme de dispositifs (9) dans laquelle chaque première extrémité de dispositif (9) de raccordement présente une forme parmi une pluralité de formes, la pluralité de formes comprenant une emboiture crénelée (17), une queue enfichable (19) ou une queue encliquetable (21), chaque organe de liaison (25) du dispositif (9) présentant une dimension identique,
le raccord modulaire (29) comprend en outre le corps tubulaire (1) en matière thermoplastique comprenant une âme centrale (3) pourvue d'au moins une emboiture destinée à être raccordée à l'organe de liaison (25) du dispositif (9) de raccordement, l'emboiture comprenant une collerette (5) et la collerette (5) présentant une surface de révolution tubulaire de liaison (7),
le corps tubulaire (1) est compris dans une gamme de corps tubulaires (1) dans laquelle chaque âme centrale (3) de corps tubulaire (1) est une portion tubulaire (11) rectiligne, une portion tubulaire (11) coudée ou dans laquelle l'âme centrale (3) comprend plusieurs portions tubulaires organisées autour d'un point central et raccordées de manière à permettre le passage d'un fluide d'une portion à l'autre,
la surface de révolution (27) du dispositif (9) de raccordement et la surface de révolution (7) du corps tubulaire (1) présentant une complémentarité de forme.

2. Raccord modulaire (29) selon la revendication 1, dans lequel le corps tubulaire (1) présente au moins une extrémité (30) destinée à être raccordée à une conduite (14) pour permettre le passage d'un fluide entre le corps tubulaire (1) et la conduite (14).

3. Raccords modulaire (29) selon l'une des revendications précédentes, dans laquelle la gamme de corps tubulaires (1) comprend des corps tubulaires (1) présentant chacun une forme parmi une pluralité de formes, la pluralité de formes comprenant une emboiture crénelée, une queue enfichable ou une queue encliquetable.

4. Raccord modulaire (29) selon la revendication 1 dans lequel les surfaces de révolution (7, 27) sont solidarisées par une soudure annulaire par ultrasons, la soudure étanchéifiant le raccord modulaire (29) par rapport au milieu extérieur (37).

5. Raccord modulaire selon la revendication 4, dans lequel la surface de révolution (7) du corps tubulaire (1) est intérieure et la surface de révolution (27) du dispositif (9) est extérieure.

6. Raccord modulaire (29) selon l'une des revendications 1, 4 ou 5, comprenant une embase (31) orientable radialement agencée pour être solidarisée à la première extrémité (13) du dispositif (9) de raccordement.

7. Raccord modulaire (29) selon l'une des revendications 1 ou 4 à 6, dans lequel le dispositif (9) de raccordement présente un repère visuel (35) attestant du bon positionnement de la conduite (14) sur la première extrémité (13).

8. Raccord modulaire (29) selon l'une des revendications 6 ou 7 en combinaison de la 6, dans lequel l'embase (31) orientable est destinée à solidariser la conduite (14) au dispositif (9) de raccordement.

9. Gamme de raccords modulaires (29) comprenant une pluralité de raccords modulaires (29) selon l'une des revendications 1 ou 4 à 8.

10. Procédé de fabrication d'un raccord modulaire (29) selon l'une des revendications précédentes, à partir d'au moins un corps tubulaire (1) issu d'une gamme de corps tubulaires (1) et d'un dispositif (9) de raccordement issu d'une gamme de dispositifs (9) de raccordement, le procédé comprenant les étapes consistant à :
(a) choisir le corps tubulaire (1) dans la gamme de corps tubulaires (1) et le ou les dispositifs (9) de raccordement dans la gamme de dispositifs (9) de raccordement,
(b) positionner le dispositif (9) de raccordement et le corps tubulaire (1) de telle sorte à faire coïncider la surface tubulaire de liaison de l'organe de liaison (25) et la surface tubulaire de liaison de la collerette (5),
(c) effectuer une soudure annulaire par ultrasons du dispositif (9) de raccordement sur le corps tubulaire (1).

11. Raccord modulaire (29) selon l'une des revendications 1, 2, 4 ou 5, comprenant en outre un élément de fixation (54) agencé pour être disposé à un emplacement dédié du raccord modulaire (29) et étant apte à réaliser le raccordement de la conduite (14) à la première extrémité (13) en se déformant de manière irréversible.

12. Raccord modulaire (29) selon l'une des revendications 1, 2 ou 4 à 8, comprenant en outre un organe de maintien (40) de la conduite (14) en une position raccordée à la première extrémité (13), l'organe de maintien (40) comprenant une portion élastique (42) agencée pour autoriser le rapprochement ou l'insertion de la conduite (14) pour atteindre la position raccordée et agencée pour empêcher par contact l'éloignement de la conduite (14) de la première extrémité (13).

13. Raccord modulaire (29) selon la revendication 12, comprenant en outre un élément de neutralisation (52) de l'organe de maintien (40) de la conduite (14), l'élément de neutralisation (52) étant apte à déplacer la portion élastique (42) en une position de retrait dans laquelle la conduite (14) et la première extrémité (13) sont aptes à être éloignées.

14. Raccord modulaire (29) selon l'une des revendications 1, 2, 4 à 8, 11 ou 12, dans laquelle l'âme centrale (3) du corps tubulaire (1) est pourvue d'une emboiture d'un second type (64) apte à être raccordée par complémentarité de forme à l'emboiture d'un autre corps tubulaire (1), l'emboiture de l'autre corps tubulaire (1) comprenant une collerette (5) présentant une surface de révolution (7) de forme complémentaire à une surface de révolution (66) de l'emboiture du second type (64).

## Patentansprüche

1. Modulares Kupplungsstück (29), eine Verbindungsvorrichtung (9) aus einem thermoplastischen Material umfassend, die einen rohrförmigen Abschnitt (11) umfasst, der versehen ist mit:
- einem ersten Ende (13), das dazu bestimmt ist, mit einer Leitung (14) verbunden zu werden, um das Durchströmen einer Flüssigkeit zwischen der Leitung (14) und dem rohrförmigen Abschnitt (11) zu ermöglichen,
- einem zweiten Ende (23), das ein Verbindungselement (25) umfasst, das dazu bestimmt ist, mit einem Schaft eines rohrförmigen Kupplungsgehäuses (1) verbunden zu werden, wobei das zweite Ende (23) angeordnet ist, um das Durchströmen einer Flüssigkeit zwischen dem rohrförmigen Abschnitt (11) und dem rohrförmigen Kupplungsgehäuse (1) zu ermöglichen, wobei das Verbindungselement (25) eine rohrförmige Verbindungsrotationsfläche (27) aufweist,
wobei die Verbindungsvorrichtung (9) in einer Reihe von Vorrichtungen (9) enthalten ist, wobei jedes erste Ende der Verbindungsvorrichtung (9) eine Form aus einer Vielzahl von Formen aufweist, wobei die Vielzahl von Formen einen gezackten Schaft (17), ein Steckende (19) oder ein Rastende (21) umfasst, und jedes Verbindungselement (25) der Vorrichtung (9) eine identische Abmessung aufweist,
wobei das modulare Kupplungsstück (29) darüber hinaus das rohrförmige Gehäuse (1) aus einem thermoplastischen Material umfasst, das einen mittleren Steg (3) umfasst, der mit zumindest einem Schaft versehen ist, der dazu bestimmt ist, mit dem Verbindungselement (25) der Verbindungsvorrichtung (9) verbunden zu werden, wobei der Schaft eine Überkragung (5) umfasst, und die Überkragung (5) eine rohrförmige Verbindungsrotationsfläche (7) aufweist,
wobei das rohrförmige Gehäuse (1) in einer Reihe von rohrförmigen Gehäusen (1) enthalten ist, wobei jeder mittlere Steg (3) des rohrförmigen Gehäuses (1) ein geradliniger rohrförmiger Abschnitt (11), ein gebogener rohrförmiger Abschnitt (11) ist, oder in dem der mittlere Steg (3) mehrere rohrförmige Abschnitte umfasst, die um einen zentralen Punkt angeordnet und derart angeschlossen sind, um das Durchströmen einer Flüssigkeit von einem Abschnitt zum anderen zu ermöglichen,
wobei die Rotationsfläche (27) der Verbindungsvorrichtung (9) und die Rotationsfläche (7) des rohrförmigen Gehäuses (1) eine Formkomplementarität aufweisen.

2. Modulares Kupplungsstück (29) nach Anspruch 1, wobei das rohrförmige Gehäuse (1) zumindest ein Ende (30) aufweist, das dazu bestimmt ist, mit einer Leitung (14) verbunden zu werden, um das Durchströmen einer Flüssigkeit zwischen dem rohrförmigen Gehäuse (1) und der Leitung (14) zu ermöglichen.

3. Modulares Kupplungsstück (29) nach einem der vorherigen Ansprüche, wobei die Reihe an rohrförmigen Gehäusen (1) rohrförmige Gehäuse (1) umfasst, die jeweils eine Form aus einer Vielzahl von Formen aufweisen, wobei die Vielzahl von Formen einen gezackten Schaft, ein Steckende oder ein Rastende umfasst.

4. Modulares Kupplungsstück (29) nach Anspruch 1, wobei die Rotationsflächen (7, 27) durch eine ringförmige Ultraschall-Schweißnaht fest verbunden sind, wobei die Schweißnaht das modulare Kupplungsstück (29) im Verhältnis zum externen Milieu (37) abdichtet.

5. Modulares Kupplungsstück nach Anspruch 4, wobei die Rotationsfläche (7) des rohrförmigen Gehäuses (1) eine Innenfläche, und die Rotationsfläche (27) der Vorrichtung (9) eine Außenfläche ist.

6. Modulares Kupplungsstück (29) nach einem der Ansprüche 1, 4 oder 5, einen ausrichtbaren Röhrenfuß (31) umfassend, der angeordnet ist, um fest mit dem ersten Ende (13) der Verbindungsvorrichtung (9) verbunden zu werden.

7. Modulares Kupplungsstück (29) nach einem der Ansprüche 1 oder 4 bis 6, wobei die Verbindungsvorrichtung (9) eine Sichtmarkierung (35) aufweist, welche die korrekte Positionierung der Leitung (14) am ersten Ende (13) bestätigt.

8. Modulares Kupplungsstück (29) nach einem der Ansprüche 6 oder 7 in Verbindung mit Anspruch 6, wobei der ausrichtbare Röhrenfuß (31) dazu bestimmt ist, die Leitung (14) fest mit der Verbindungsvorrichtung (9) zu verbinden.

9. Reihe von modularen Kupplungsstücken (29), eine Vielzahl von modularen Kupplungsstücken (29) nach einem der Ansprüche 1 oder 4 bis 8 umfassend.

10. Verfahren zur Herstellung eines modularen Kupplungsstücks (29) nach einem der vorherigen Ansprüche aus zumindest einem rohrförmigen Gehäuse (1) aus einer Reihe von rohrförmigen Gehäusen (1) und zumindest einer Verbindungsvorrichtung (9) aus einer Reihe von Verbindungsvorrichtungen (9), wobei das Verfahren die folgenden Schritte umfasst:
(a) Auswählen des rohrförmigen Gehäuses (1) aus einer Reihe von rohrförmigen Gehäusen (1) und des oder der Verbindungsvorrichtungen (9) aus einer Reihe von Verbindungsvorrichtungen (9),
(b) Positionieren der Verbindungsvorrichtung (9) und des rohrförmigen Gehäuses (1) sodass die rohrförmige Verbindungsfläche des Verbindungselements (25) und die rohrförmige Verbindungsfläche der Überkragung (5) übereinstimmen,
(c) Durchführen einer ringförmigen Ultraschall-Verschweißung der Verbindungsvorrichtung (9) auf dem rohrförmigen Gehäuse (1).

11. Modulares Kupplungsstück (29) nach einem der Ansprüche 1, 2, 4 oder 5, darüber hinaus ein Befestigungselement (54) umfassend, das angeordnet ist, um an einer Stelle angebracht zu werden, die für das modulare Kupplungsstück (29) bestimmt, und imstande ist, die Verbindung der Leitung (14) mit dem ersten Ende (13) durchzuführen, indem es sich auf nicht umkehrbare Art verformt.

12. Modulares Kupplungsstück (29) nach einem der Ansprüche 1, 2 oder 4 bis 8, darüber hinaus ein Element zum Festhalten (40) der Leitung (14) in einer mit dem ersten Ende (13) verbundenen Position umfassend, wobei das Element zum Festhalten (40) einen elastischen Abschnitt (42) umfasst, der angeordnet ist, um die Annäherung oder Einführung der Leitung (14) freizugeben, um die angeschlossene und angeordnete Position zu erreichen, um durch den Kontakt die Entfernung der Leitung (14) vom ersten Ende (13) zu verhindern.

13. Modulares Kupplungsstück (29) nach Anspruch 12, darüber hinaus ein Element (52) zum Neutralisieren des Elements zum Festhalten (40) der Leitung (14) umfassend, wobei das Element (52) zum Neutralisieren imstande ist, den elastischen Abschnitt (42) in eine Abhebeposition zu verschieben, in der die Leitung (14) und das erste Ende (13) imstande sind, voneinander entfernt zu werden.

14. Modulares Kupplungsstück (29) nach einem der Ansprüche 1, 2, 4 bis 8, 11 oder 12, wobei der mittlere Steg (3) des rohrförmigen Gehäuses (1) mit einem Schaft eines zweiten Typs (64) versehen ist, der imstande ist, durch Formkomplementarität mit dem Schaft eines anderen rohrförmigen Gehäuses (1) verbunden zu werden, wobei der Schaft des anderen rohrförmigen Gehäuses (1) eine Überkragung (5) umfasst, die eine Rotationsfläche (7) in einer Form ergänzend zu einer Rotationsfläche (66) des Schafts des zweiten Typs (64) aufweist.

## Claims

1. A modular fitting (29) comprising a connection device (9) made of a thermoplastic material including a tubular portion (11) provided with:
- a first end (13) intended to be connected to a conduit (14) to allow the passage of a fluid between the conduit (14) and the tubular portion (11),
- a second end (23) including a linking member (25) intended to be connected to a socket of a fitting tubular body (1), the second end (23) being arranged to allow the passage of a fluid between the tubular portion (11) and the fitting tubular body (1), the linking member (25) having a linking tubular revolution surface (27),
the connection device (9) is comprised within a range of devices (9) wherein each first connection device (9) end has a shape among a plurality of shapes, the plurality of shapes comprising a serrated socket (17), a plug-in shank (19) or a snap-on shank (21), each linking member (25) of the device (9) having an identical dimension,
the modular fitting (29) further comprises the tubular body (1) made of a thermoplastic material comprising a central core (3) provided with at least one socket intended to be connected to the linking member (25) of the connection device (9), the socket comprising a collar (5) and the collar (5) having a linking tubular revolution surface (7),
the tubular body (1) is comprised within a range of tubular bodies (1) in which each tubular body (1) central core (3) is a rectilinear tubular portion (11), a bent tubular portion (11) or in which the central core (3) comprises several tubular portions arranged around a central point and connected so as to allow the passage of a fluid from one portion to another,
the revolution surface (27) of the connection device (9) and the revolution surface (7) of the tubular body (1) being complementary in shape.

2. The modular fitting (29) according to claim 1, wherein the tubular body (1) has at least one end (30) intended to be connected to a conduit (14) to allow the passage of a fluid between the tubular body (1) and the conduit (14).

3. The modular fitting (29) according to any of the preceding claims, wherein the range of tubular bodies (1) comprises tubular bodies (1) each having a shape among a plurality of shapes, the plurality of shapes comprising a serrated socket, a plug-in shank or a snap-on shank.

4. The modular fitting (29) according to claim 1 wherein the revolution surfaces (7, 27) are secured by an annular ultrasonic welding, the welding sealing the modular fitting (29) relative to the external environment (37).

5. The modular fitting according to claim 4, wherein the revolution surface (7) of the tubular body (1) is internal and the revolution surface (27) of the device (9) is external.

6. The modular fitting (29) according to any of claims 1, 4 or 5, comprising a base (31) able to be radially oriented, and arranged to be secured to the first end (13) of the connection device (9).

7. The modular fitting (29) according to any of claims 1 or 4 to 6, wherein the connection device (9) has a visual marker (35) proving the proper positioning of the conduit (14) on the first end (13).

8. The modular fitting (29) according to any of claim 6 or 7 in combination of claim 6, wherein the base (31) able to be oriented is intended to secure the conduit (14) to the connection device (9).

9. A range of modular fittings (29) comprising a plurality of modular fittings (29) according to any of claims 1 or 4 to 8.

10. A method for manufacturing a modular fitting (29) according to any of the preceding claims, from at least one tubular body (1) from a range of tubular bodies (1) and one connection device (9) from a range of connection devices (9), the method comprising the steps consisting of:
(a) selecting the tubular body (1) in the range of tubular bodies (1) and the connection device(s) (9) in the range of connection devices (9),
(b) positioning the connection device (9) and the tubular body (1) so as to match the linking tubular surface of the linking member (25) and the linking tubular surface of the collar (5),
(c) performing an annular ultrasonic welding of the connection device (9) on the tubular body (1).

11. The modular fitting (29) according to any of claims 1, 2, 4 or 5, further comprising a fastening element (54) arranged to be disposed in a dedicated location of the modular fitting (29) and being able to carry out the connection of the conduit (14) to the first end (13) by being irreversibly deformed.

12. The modular fitting (29) according to any of claims 1, 2 or 4 to 8, further comprising a member (40) for holding the conduit (14) in a position connected to the first end (13), the holding member (40) comprising an elastic portion (42) arranged to allow the matching or the insertion of the conduit (14) to reach the connected position and arranged to prevent by contact the separation of the conduit (14) from the first end (13).

13. The modular fitting (29) according to claim 12, further comprising a neutralizing element (52) of the conduit (14) holding member (40), the neutralizing element (52) being able to displace the elastic portion (42) into a retraction position in which the conduit (14) and the first end (13) are able to be separated.

14. The modular fitting (29) according to any of claims 1, 2, 4 to 8, 11 or 12, wherein the central core (3) of the tubular body (1) is provided with a socket of a second type (64) able to be connected in a form-fitting manner to the socket of another tubular body (1), the socket of the other tubular body (1) comprising a collar (5) having a revolution surface (7) complementary in shape to a revolution surface (66) of the socket of the second type (64).
